(19) **Europäisches Patentamt / European Patent Office / Office européen des brevets**

(11) **EP 1 895 404 B1**

(12) **FASCICULE DE BREVET EUROPÉEN**

(45) Date de publication et mention
de la délivrance du brevet:
**02.03.2011 Bulletin 2011/09**

(51) Int Cl.:
***G06F 7/72*** *(2006.01)*

(21) Numéro de dépôt: **07115241.7**

(22) Date de dépôt: **29.08.2007**

(54) **Brouillage d'un calcul effectué selon un algorithme RSA-CRT**

Maskierung einer gemäß eines RSA-CRT-Algorithmus durchgeführten Berechnung

Masking of a calculation performed according to an RSA-CRT algorithm

(84) Etats contractants désignés:
**DE FR GB IT**

(30) Priorité: **31.08.2006 FR 0653523**

(43) Date de publication de la demande:
**05.03.2008 Bulletin 2008/10**

(60) Demande divisionnaire:
**10189505.0 / 2 284 690**

(73) Titulaire: **ST MICROELECTRONICS S.A.**
**92120 Montrouge (FR)**

(72) Inventeurs:
• **Liardet, Pierre-Yvan**
**13790 Peynier (FR)**

• **Teglia, Yannick**
**13011 Marseille (FR)**

(74) Mandataire: **de Beaumont, Michel**
**1bis, rue Champollion**
**38000 Grenoble (FR)**

(56) Documents cités:
**FR-A- 2 875 355     US-A1- 2003 044 014**

• **ROMAN NOVAK: "SPA-based adaptive chosen ciphertext attack on RSA implementation" PKC 2002, LNCS, vol. 2274, 31 December 2002 (2002-12-31), pages 252-262, Springer-Verlag Berlin Heidelberg ISBN: 3-540-43168-3**

## Description

Domaine de l'invention

La présente invention concerne de façon générale les circuits électroniques et, plus particulièrement, les circuits exécutant des calculs d'exponentiation modulaire selon un algorithme RSA-CRT.

La présente invention s'applique plus particulièrement à la protection, contre des tentatives de piratage, d'une quantité (mot numérique), dite privée ou secrète, utilisée dans un processus de protection de données, ou d'authentification ou d'identification d'un dispositif électronique (par exemple, une carte à puce ou une carte électronique comprenant un ou plusieurs circuits intégrés).

L'invention concerne notamment le brouillage de l'exécution d'un algorithme RSA-CRT. Par brouillage, on entend une modification des caractéristiques physiques observables (consommation, rayonnement thermique, électromagnétique, etc.) induite par le fonctionnement du dispositif électronique exécutant le calcul.

Exposé de l'art antérieur

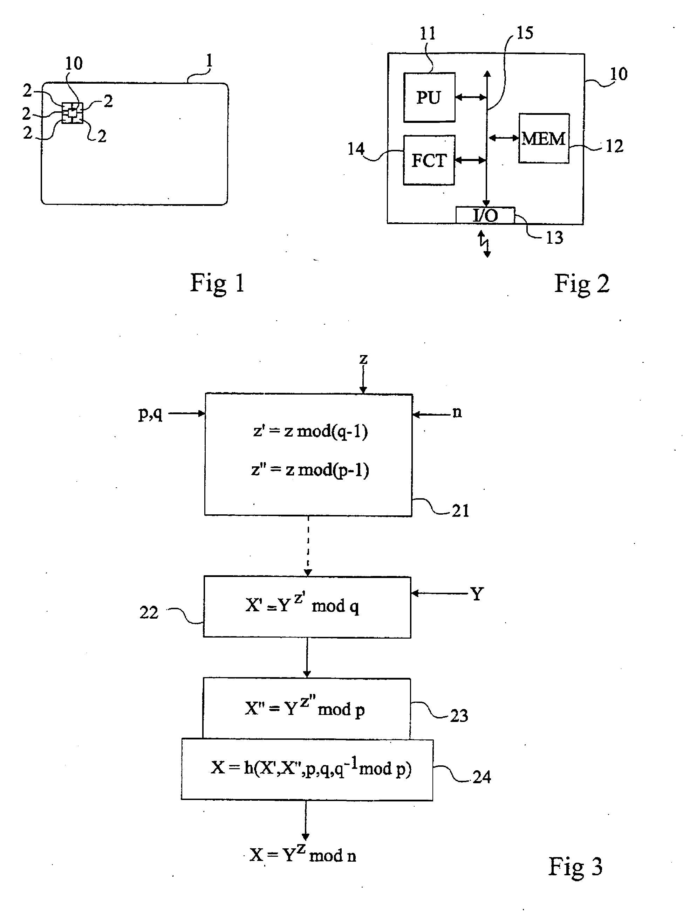

La figure 1 représente, de façon très schématique, une carte à puce 1 du type auquel s'applique à titre d'exemple la présente invention. Une telle carte 1 est constituée d'un matériau support (généralement en matière plastique) portant ou renfermant un ou plusieurs circuits électroniques 10. Le circuit 10 communique avec l'extérieur au moyen de contacts 2, connectables à un terminal de lecture ou de lecture/écriture. Le circuit 10 peut également être associé à des moyens d'émission-réception sans contact et communiquer sans fil avec un terminal (que ce soit par un rayonnement radio fréquence ou électromagnétique) .

La figure 2 représente, de façon très schématique et sous forme de blocs, un exemple de circuit électronique 10 du type auquel s'applique la présente invention. Un tel circuit est, par exemple, celui d'une carte à puce telle que représentée en figure 1. Selon un autre exemple, ce circuit est monté sur une carte électronique avec d'autres circuits intégrés.

Le circuit 10 comporte une unité de traitement 11 (PU), par exemple une unité centrale de traitement, communiquant, à l'intérieur du circuit 10 et par l'intermédiaire d'un ou plusieurs bus 15 de données, d'adresses et de commandes, au moins avec une ou plusieurs mémoires 12 (MEM) volatiles et/ou non volatiles et avec un circuit 13 d'entrée/sortie (I/O). Le circuit 13 sert d'interface pour communication, avec ou sans contact, avec l'extérieur du circuit 10. Le plus souvent, le circuit 10 comporte d'autres fonctions logicielles et/ou matérielles, symbolisées en figure 2 par un bloc 14 (FCT) relié aux bus 15.

Dans un circuit 10 auquel s'applique la présente invention, l'unité de traitement 11 ou l'une des fonctions 14 est à même d'exécuter un traitement algorithmique sur des données numériques en mettant en oeuvre un algorithme connu sous la dénomination RSA-CRT. Le terme "données" est utilisé pour désigner n'importe quelle quantité exploitable par l'unité de traitement 11 ou une fonction annexe 14, qu'il s'agisse d'instructions de programmes, d'adresses, de données proprement dites, de commandes, etc.

L'algorithme RSA est un algorithme asymétrique mettant en oeuvre une ou plusieurs exponentiations modulaires et utilisant au moins deux quantités numériques pour chiffrer/déchiffrer ou signer/vérifier des données. Ces quantités sont appelées clés publique (notée e) et privée (notée d). Un tel algorithme est décrit, par exemple, dans l'ouvrage "Handbook of Applied Cryptography" de Alfred J. Menezes, Paul C. Van Oorschot et Scott A. Vanstone, publié par CRC Presse en 1997, pages 285-286.

Les clés d et e sont choisies de telle sorte que leur multiplication modulaire, modulo $\varphi(n)$, soit égale à 1 (($e*d$) = 1 mod ($\varphi(n)$), où $\varphi$ représente la fonction d'Euler et n le modulo RSA. Le résultat, noté A mod b, d'une opération (addition, multiplication, exponentiation, etc.) modulaire correspond au reste de la division euclidienne de A par b (b est appelé le modulo).

Dans le RSA, un chiffrement d'un message M consiste à calculer un message chiffré C comme étant le résultat de l'exponentiation modulaire $M^e$ mod n. Un déchiffrement d'un message C consiste à retrouver le message en clair M comme étant le résultat de l'exponentiation modulaire $C^d$ mod n. Un calcul d'une signature S d'un message M consiste à calculer l'exponentiation modulaire $M^d$ mod n. Une vérification d'une signature S consiste à calculer l'exponentiation modulaire Se mod n pour vérifier que l'on retrouve bien le message M.

Dans tous les cas, il s'agit d'effectuer une exponentiation modulaire d'exposant z et de modulo n à partir d'une donnée Y ($X = Y^z$ mod n).

La figure 3 illustre, par un organigramme très schématique, un exemple de mise en oeuvre de l'algorithme RSA en appliquant le théorème des restes chinois (Chinese Remainder Theorem) dont un exemple est décrit dans l'ouvrage cité ci-dessus (page 612).

Une telle mise en oeuvre vise à accélérer le calcul de la quantité $X = Y^z$ mod n en effectuant deux exponentiations modulaires partielles, en utilisant deux nombres entiers p et q, premiers entre eux et tels que leur produit p*q est égal à la quantité n et que le résultat de la multiplication des clés publique et privée est égal à l'unité modulo (p-1)*(q-1) ((e*d) - 1 mod((p-1)*(q-1))). On note généralement q la quantité la plus petite entre p et q. Les quantités p et q doivent rester inconnues de l'extérieur car elles renseignent sur la clé privée.

Une première phase (bloc 21) consiste à calculer deux quantités z' et z" à partir du modulo n, de ses facteurs p et q et de la clé z, de la façon suivante :

$$z' = z \bmod (q-1) \; ;$$

et

$$z" = z \bmod (p-1).$$

Les quantités z' et z" sont des réductions modulaires modulo q-1, respectivement p-1, de la quantité z. Elles sont soit calculées à la volée, c'est-à-dire pour chaque nouveau calcul d'exponentiation, soit précalculées et stockées dans une des mémoires du circuit 10.

Une deuxième phase (bloc 22) est un premier calcul d'exponentiation modulaire d'une quantité X' égale à $Y^{z'}$ mod q. Dans le cas où les quantités z' et z" ont été précalculées et enregistrées, l'introduction de la donnée Y intervient pour l'exécution de la phase 22.

Une troisième phase est un deuxième calcul (bloc 23) d'exponentiation modulaire d'une quantité X" égale à $Y^{z"}$ mod p, puis la mise en oeuvre (bloc 24) d'une fonction h, dite de recombinaison, ayant comme opérandes les quantités X', X", p, q et $(q^{-1} \bmod p)$. La quantité $q^{-1}$ mod p peut avoir été précalculée en même temps que les quantités z' et z" (bloc 21) et mémorisée.

La fonction h consiste à calculer la différence entre les résultats partiels X" et X', à multiplier cette différence par la quantité $q^{-1}$ mod p, puis le résultat obtenu par le nombre q avant d'ajouter le résultat partiel X". Cela revient à exécuter l'équation suivante:

$$X = [(X" - X') * (q^{-1} \bmod p)] * q + X'.$$

En pratique, le calcul peut prendre d'autres formes, pourvu que le résultat respecte celui de l'équation ci-dessus.

Par exemple, comme p et q sont premiers entre eux, ce calcul peut s'écrire :

$$X = [(p^{-1} \bmod q) * p * X' + (q^{-1} \bmod p) * q * X"] \bmod n, \text{ car :}$$
$$(p^{-1} \bmod q) * p = 1 - (q^{-1} \bmod p) * q.$$

Les étapes 23 et 24 ont été illustrées dans une même phase car, dans le cas illustré, elles sont exécutées dans un même opérateur (logiciel ou matériel) alors que l'étape 22 est exécutée par un autre opérateur. Toutefois, d'autres réalisations sont possibles. Par exemple, les étapes 22 à 24 peuvent aussi être exécutées par trois opérateurs différents. Les étapes 22 et 23 peuvent aussi être exécutées par un même opérateur chargé avec des opérandes différents.

Un inconvénient est qu'une exécution par un circuit électronique d'un algorithme de type RSA-CRT est sensible à des attaques par analyse de la consommation du circuit qui l'exécute. En particulier, une telle exécution est sensible aux attaques connues sous la dénomination SPA (Simple Power Analysis). De telles attaques consistent à faire exécuter les calculs sur des données particulières qui permettent de remonter à la factorisation de n (p et q). Or, la connaissance des quantités p et q permet de trouver la clé privée.

On a déjà proposé de brouiller l'exécution d'un algorithme RSA en introduisant des nombres aléatoires dans le calcul.

Un exemple est décrit dans la demande de brevet américain n° 2003/0044014. Cet exemple consiste à introduire des nombres aléatoires dans le modulo d'un calcul d'exponentiation modulaire. Un tel processus est efficace sur des analyses statistiques de la consommation du circuit (DPA, Differential Power Analysis) où l'attaquant effectue des choix de clés, mais pose problème contre des attaques de type SPA où l'attaquant effectue des choix de données. En particulier, le premier calcul de l'étape de recombinaison (bloc 24) n'est pas protégé par le procédé décrit dans cette demande de brevet. Or, c'est précisément ce calcul (différence entre les résultats partiels X' et X") qui est visé par une attaque par choix de message ou de données (voir "SPA-based Adaptive Chosen-Chiphertext Attack on RSA Implementation", R.Novak, PKC 2002, LNCS 2274, pages 252-262, 2002).

Résumé de l'invention

La présente invention vise à pallier tout ou partie des inconvénients des procédés classiques de brouillage d'algorithmes RSA-CRT.

L'invention vise plus particulièrement à protéger l'exécution d'un calcul de type RSA-CRT contre des attaques par analyse, de type SPA, de la consommation du circuit intégré exécutant le calcul.

L'invention vise préférentiellement à ne pas intervenir à l'intérieur des étapes de calcul des exponentiations modulaires partielles de l'algorithme, ni au sein de l'étape de recombinaison.

Pour atteindre tout ou partie de ces objets ainsi que d'autres, la présente invention prévoit un procédé de brouillage d'un calcul d'algorithme RSA-CRT par un circuit électronique, dans lequel un résultat est obtenu à partir de deux calculs d'exponentiation modulaire fournissant chacun un résultat partiel et d'une étape de recombinaison, et dans lequel :

une première étape ajoute une quantité numérique aléatoire à au moins un premier résultat partiel avant ladite étape de recombinaison ; et
une deuxième étape annule les effets de cette quantité après l'étape de recombinaison.

Selon la présente invention, chaque résultat partiel est modulo l'un de deux nombres premiers entre eux et dont le produit représente le modulo de l'exponentiation modulaire, ladite quantité numérique étant telle que l'addition modulaire, modulo le nombre à partir duquel est obtenu le deuxième résultat partiel, de cette quantité au premier résultat partiel, n'est pas nulle.

Selon un mode de mise en oeuvre de la présente invention, ladite quantité numérique est inférieure à la différence entre ledit nombre, à partir duquel est obtenu le deuxième résultat partiel, et le premier résultat partiel.

Selon un mode de mise en oeuvre de la présente invention, le résultat $X_m$ de l'étape de recombinaison respecte la relation suivante:

$$X_m = [(X'' - (X' + R)) * (q^{-1} \bmod p)] * q + (X' + R),$$

où X' et X'' désignent les premier et deuxième résultats partiels, q et p les premier et deuxième nombres premiers à partir desquels sont respectivement obtenus ces résultats, et R ladite quantité numérique.

Selon un mode de mise en oeuvre de la présente invention, la deuxième étape applique la relation suivante :

$$X = X_m - R * (1 - (q^{-1} \bmod p) * q).$$

Selon un mode de mise en oeuvre de la présente invention :

le premier résultat partiel X' correspond à une exponentiation modulaire de formule $Y^{z'} \bmod q$, avec z' = d mod(q-1), où d représente une clé privée de l'algorithme RSA ;
le deuxième résultat partiel X'' correspond à une exponentiation modulaire de formule $Y^{z''} \bmod p$, avec z'' = d mod (p-1) ; et
les nombres p et q respectent l'équation:
e*d = 1 mod ((p-1)*(q-1)), où e représente une clé publique de l'algorithme RSA.

Selon un mode de mise en oeuvre de la présente invention, ladite quantité numérique est changée à chaque exécution de l'algorithme.

L'invention prévoit également un circuit électronique comportant des moyens pour la mise en oeuvre du procédé de brouillage.

Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :

la figure 1 décrite précédemment est une vue très schématique de dessus d'une carte à puce du type auquel s'applique à titre d'exemple la présente invention ;

la figure 2 décrite précédemment représente, de façon très schématique et sous forme de blocs, un exemple de circuit électronique auquel s'applique la présente invention ;

la figure 3 décrite précédemment est un organigramme simplifié illustrant la mise en oeuvre d'un algorithme RSA-CRT classique ; et

la figure 4 représente, de façon très schématique et sous forme de blocs, un mode de mise en oeuvre de la présente invention.

De mêmes éléments ont été désignés par de mêmes références aux différentes figures. De plus, par souci de clarté, seuls les étapes et éléments qui sont utiles à la compréhension de l'invention ont été représentés et seront décrits. En particulier, l'origine des données à soumettre à un algorithme RSA-CRT auquel s'applique l'invention n'a pas été détaillée, l'invention étant compatible avec toute origine classique de telles données selon qu'il s'agit de mécanismes de chiffrement/déchiffrement ou de signature/vérification. De même, la destination des données, traitées par la mise en oeuvre de l'invention, n'a pas été détaillée, l'invention étant là encore compatible avec toute exploitation classique.

Description détaillée

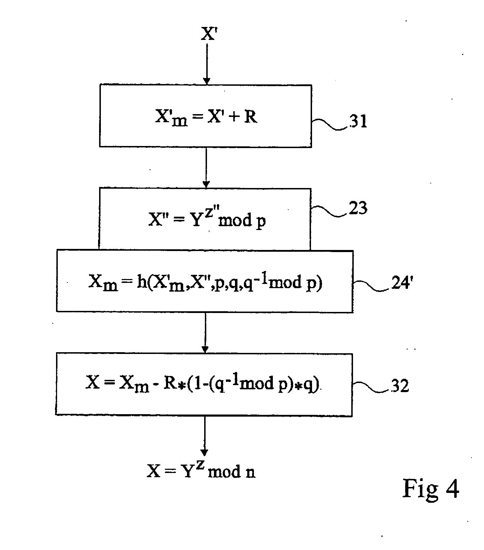

La figure 4 est un organigramme simplifié d'une partie d'un algorithme RSA-CRT selon un mode de mise en oeuvre de la présente invention. Pour simplifier, les étapes qui précèdent la deuxième exponentiation modulaire partielle n'ont pas été illustrées, celles-ci n'étant pas modifiées par ce mode de mise en oeuvre et sont, par exemple, identiques aux phases 21 et 22 décrites précédemment en relation avec la figure 3.

Selon ce mode de mise en oeuvre de la présente invention, le résultat $X'(= Y^{z'} \bmod q)$ de la première exponentiation modulaire partielle est modifié (bloc 31) par l'ajout d'une quantité numérique de masquage R, en une quantité $X'_m = X' + R$. La quantité R est un nombre imprédictible, plus précisément un nombre aléatoire. L'obtention de la quantité R peut prendre diverses formes, par exemple, la génération d'un nombre aléatoire, suivie d'une vérification de conditions qui seront précisées par la suite. La quantité R peut également être obtenue par tirage dans une table de valeurs enregistrées et respectant les conditions qui seront exposées par la suite.

Puis, la deuxième exponentiation modulaire partielle X" est calculée (bloc 23) et la recombinaison (bloc 24') est mise en oeuvre en utilisant la quantité $X'_m$. Le ou les opérateurs (logiciels et/ou matériels) utilisés dans cette troisième phase ne sont pas modifiés par cette mise en oeuvre de l'invention, seule la donnée d'entrée X' est remplacée par la donnée $X'_m$ modifiée à l'étape 31.

Le résultat (noté $X_m$) fourni par l'étape 24 est retraité dans une étape 32 pour obtenir le résultat X qui aurait été calculé sans l'introduction de la quantité R. L'étape 32 effectue, dans ce mode de réalisation préféré, le calcul suivant:

$$X = X_m - R*(1 - (q^{-1} \bmod p)*q).$$

Ce résultat représente la quantité $Y^z \bmod n$.

En effet, l'application de la fonction h (étape 24) aux quantités $X'_m$, X", p, q et ($q^{-1} \bmod p$) représente l'équation suivante :

$$X_m = [(X" - (X' + R))*(q^{-1} \bmod p)]*q + (X' + R).$$

L'application de l'étape de retraitement 32 donne :

$$X = [(X" - (X' + R))*(q^{-1} \bmod p)]*q + (X' + R) - R*(1 - (q^{-1} \bmod p)*q).$$

En développant, on obtient :

$$X = X''*(q^{-1} \bmod p)*q - X'*(q^{-1} \bmod p)*q$$
$$- R*(q^{-1} \bmod p)*q + X' + R - R - R*(q^{-1} \bmod p)*q) ;$$

d'où :

$$X = X''*(q^{-1} \bmod p)*q - X'*(q^{-1} \bmod p)*q + X' ;$$

donc :

$$X = [(X'' - X')*(q^{-1} \bmod p)]*q + X'.$$

La quantité R est choisie pour que $(X' + R) \bmod p$ soit différent de zéro. Dans le cas contraire, la contribution de X' dans la recombinaison est éliminée, ce qui ne permet plus de retrouver le résultat.

Pour qu'aucun des produits ne risque de s'effectuer avec un facteur nul, la quantité R est préférentiellement choisie pour que la quantité X' + R soit inférieure à la quantité p.

Dans le cas contraire, le rétablissement du résultat (étape 32, figure 4) doit être remplacé par un calcul différent selon que la quantité X' + R est ou non inférieure à p. Si X' + R est supérieur ou égal à p, la quantité R prise en compte dans l'équation du bloc 32 (et pas la quantité R introduite au bloc 31 qui n'est pas modifiée) est remplacée par une quantité $R_m = (X'' - (X' + R)) \bmod p$.

A titre de variante, l'introduction de la quantité R intervient sur le calcul de la quantité X'' (bloc 23') au lieu de la quantité X'. Dans ce cas, toutes les opérations et conditions décrites ci-dessus se transposent en remplaçant R par -R.

Selon une autre variante, l'intervention sur la quantité X' est complétée par une intervention similaire sur la quantité X''. Cela revient à découper la quantité R décrite ci-dessus en deux quantités R' et -R'' avec R = R'+(-R'').

La modification de la première exponentiation modulaire X' calculée reste toutefois un mode de réalisation préféré dans une implémentation où la deuxième phase 22 est distincte de la troisième phase (étapes 23' et 24) qui inclut la recombinaison 24. Cela permet de ne pas modifier les opérateurs effectuant les calculs classiques du RSA-CRT, mais simplement leurs données d'entrée.

Un avantage de la présente invention est qu'elle brouille l'utilisation des clés contre des attaques de type SPA. En effet, même si la quantité R est la même pour plusieurs exécutions, lorsqu'un attaquant croit avoir déterminé la factorisation du modulo n, le résultat qu'il obtient est faux car ce résultat tient compte de la quantité aléatoire qu'il ne peut pas connaître. Par rapport au procédé décrit dans la demande américaine 2003/0044014, l'introduction de la quantité aléatoire en amont de l'étape de recombinaison rend le calcul résistant aux attaques de type SPA, sans intervenir sur cette étape de recombinaison (sans modifier les calculs prévus dans cette étape).

De plus, même si la quantité R doit être stockée, les résultats d'une attaque deviennent inexploitables si la valeur de la quantité R est modifiée périodiquement, de préférence, à chaque exécution de l'algorithme RSA.

Bien entendu, la présente invention est susceptible de diverses variantes et modifications qui apparaîtront à l'homme de l'art. En particulier, la mise en oeuvre de l'invention pour protéger l'exécution de l'algorithme contre des attaques de type SPA est combinable avec d'autres brouillages (par exemple, ceux décrits dans la demande américaine 2003/0044014 susmentionnée).

De plus, la mise en oeuvre de l'invention par des moyens matériels et/ou logiciels est à la portée de l'homme du métier à partir des indications fonctionnelles données ci-dessus, qu'il s'agisse des moyens de mémorisation, des moyens de calcul, des moyens de génération de quantités aléatoires, etc.

## Revendications

1. Procédé de brouillage d'un calcul d'algorithme RSA-CRT par un circuit électronique (10), dans lequel un résultat est obtenu à partir de deux calculs d'exponentiation modulaire fournissant chacun un résultat partiel (X', X'') et d'une étape de recombinaison (h), chaque résultat partiel (X', X'') étant modulo l'un de deux nombres (p, q), premiers entre eux et dont le produit représente le modulo (n) de l'exponentiation modulaire, et dans lequel :

une première étape (31) ajoute une quantité numérique aléatoire (R) à au moins un premier résultat partiel (X') avant ladite étape de recombinaison, ladite quantité numérique étant telle que l'addition modulaire, modulo le nombre (p) à partir duquel est obtenu le deuxième résultat partiel (X"), de cette quantité au premier résultat partiel (X'), n'est pas nulle ; et

une deuxième étape (32) annule les effets de cette quantité après l'étape de recombinaison.

**2.** Procédé selon la revendication 1, dans lequel ladite quantité numérique (R) est inférieure à la différence (p-X') entre ledit nombre (p), à partir duquel est obtenu le deuxième résultat partiel (X"), et le premier résultat partiel (X').

**3.** Procédé selon la revendication 2, dans lequel le résultat $X_m$ de l'étape de recombinaison (24') respecte la relation suivante :

$$X_m = [(X'' - (X' + R))*(q^{-1} \bmod p)]*q + (X' + R),$$

où X' et X" désignent les premier et deuxième résultats partiels, q et p les premier et deuxième nombres premiers à partir desquels sont respectivement obtenus ces résultats, et R ladite quantité numérique.

**4.** Procédé selon la revendication 3, dans lequel la deuxième étape (32) applique la relation suivante :

$$X = X_m - R*(1 - (q^{-1} \bmod p)*q).$$

**5.** Procédé selon les revendications 3 et 4, dans lequel :

le premier résultat partiel X' correspond à une exponentiation modulaire de formule $Y^{z'} \bmod q$, avec z' = d mod (q-1) , où d représente une clé privée de l'algorithme RSA ;
le deuxième résultat partiel X" correspond à une exponentiation modulaire de formule $Y^{z''} \bmod p$, avec z" = d mod (p-1) ; et
les nombres p et q respectent l'équation :

e*d = 1 mod ((p-1)*(q-1)), où e représente une clé publique de l'algorithme RSA.

**6.** Procédé selon l'une quelconque des revendications 1 à 5, dans lequel ladite quantité numérique (R) est changée à chaque exécution de l'algorithme.

**7.** Circuit électronique comportant des moyens adaptés à la mise en oeuvre du procédé selon l'une quelconque des revendications précédentes.

**Claims**

**1.** A method for scrambling an RSA-CRT algorithm calculation by an electronic circuit (10), wherein a result is obtained from two modular exponentiation calculations, each providing a partial result (X', X"), and from a recombination step (h), each partial result (X', X") being modulo one of two relatively prime numbers (p, q), the product of which represents the modulo (n) of the modular exponentiation and wherein:

a first step (31) adds a digital random quantity (R) to at least one first partial result (X') before said recombination step, said digital quantity (R) being such that the modular addition, modulo the number (p) from which the second partial result (X") is obtained, of this quantity to the first partial result (X'), is not zero; and
a second step (32) cancels the effects of this quantity after the recombination step.

**2.** The method of claim 1, wherein said digital quantity (R) is lower than the difference (p-X') between said number (p), from which the second partial result (X") is obtained, and the first partial result (X').

**3.** The method of claim 2, wherein result $X_m$ of the recombination step (24') respects the following relation:

$$X_m = [(X'' - (X' + R))*(q^{-1} \bmod p)]*q + (X' + R),$$

where X' and X" designate the first and second partial results, q and p designate the first and second prime numbers from which these results are respectively obtained, and R designates said digital quantity.

**4.** The method of claim 3, wherein the second step (32) applies the following relation:

$$X = X_m - R*(1 - (q^{-1} \bmod p)*q).$$

**5.** The method of claims 3 and 4, wherein:

the first partial result X' corresponds to a modular exponentiation of formula $Y^{z'} \bmod q$, with z' = d mod(q-1), where d represents a private key of the RSA algorithm;
the second partial result X" corresponds to a modular exponentiation of formula $Y^{z''} \bmod p$, with z" = d mod (p-1); and
numbers p and q respect the following equation:

e*d = 1 mod ((p-1)*(q-1)), where e represents a public key of the RSA algorithm.

**6.** The method of any of claims 1 to 5, wherein said digital quantity (R) is changed on each execution of the algorithm.

**7.** An electronic circuit comprising means for implementing the scrambling method of any of the foregoing claims.

**Patentansprüche**

**1.** Ein Verfahren zum Scrambeln einer RSA-CRT Algorithmus Berechnung durch einen elektronischen Schaltkreis (10), wobei ein Ergebnis aus zwei modularen Exponentiationsberechnungen, die jeweils ein Teilergebnis (X', X") bereitstellen und einem Rekombinationsschritt (h) erhalten wird, wobei jedes Teilergebnis (X', X") Modulo eins ist von zwei relativen Primzahlen (p, q), wobei das Produkt derselben den Modulo (n) der modularen Exponentiation darstellt und wobei:

ein erster Schritt (31) eine digitale Zufallsgröße (R) zu wenigstens einem ersten Teilergebnis (X') vor dem Rekombinationsschritt addiert, wobei die digitale Größe (R) derart ist, dass die modulare Addition, Modulo die Zahl (p) von der das zweite Teilergebnis (X") erhalten wird, dieser Größe zu dem ersten Teilergebnis (X') nicht Null ist; und
ein zweiter Schritt (32) die Effekte dieser Größe nach dem Rekombinationsschritt löscht.

**2.** Das Verfahren gemäß Anspruch 1, wobei die digitale Größe (R) kleiner ist als die Differenz (p-X') zwischen der Zahl (p), von der das zweite Teilergebnis (X") erhalten wird, und dem ersten Teilergebnis (X').

**3.** Das Verfahren gemäß Anspruch 2, wobei das Ergebnis $X_m$ des Rekombinationsschritts (24') der folgenden Beziehung genügt:

$$X_m = [(X'' - (X' + R)) * (q^{-1} \bmod p)] * q + (X' + R),$$

wobei X' und X" das erste und zweite Teilergebnis bezeichnen, q und p die ersten und zweiten Primzahlen bezeichnen von der diese Ergebnisse entsprechend erhalten werden und R die digitale Größe bezeichnet.

**4.** Das Verfahren gemäß Anspruch 3, wobei der zweite Schritt (32) die folgende Beziehung anlegt:

$$X = X_m - R * (1 - (q^{-1} \bmod p) * q).$$

5. Das Verfahren gemäß Anspruch 3 und 4, wobei:

das erste Teilergebnis X' einer modularen Exponentiation der Formel $Y^{z'}$ mod q entspricht, mit z' = d mod (q - 1), wobei d einen privaten Schlüssel des RSA Algorithmus darstellt;
das zweite Teilergebnis X" einer modularen Exponentiation der Formel $Y^{z''}$ mod p entspricht, mit z" = d mod (p - 1); und
die Zahlen p und q der folgenden Gleichung genügen:

e * d = 1 mod ((p - 1)*(q - 1)), wobei e einen öffentlichen Schlüssel des RSA Algorithmus darstellt.

6. Das Verfahren nach einem der Ansprüche 1 bis 5, wobei die digitale Größe (R) bei jeder Ausführung des Algorithmus verändert wird.

7. Ein elektronischer Schaltkreis, der Mittel aufweist zum Implementieren des Scramblingverfahrens gemäß einem der vorhergehenden Ansprüche.

Fig 1

Fig 2

$$z' = z \bmod (q-1)$$

$$z'' = z \bmod (p-1)$$

$$X' = Y^{z'} \bmod q$$

$$X'' = Y^{z''} \bmod p$$

$$X = h(X', X'', p, q, q^{-1} \bmod p)$$

$$X = Y^z \bmod n$$

Fig 3

$$X'$$

$$X'_m = X' + R \qquad 31$$

$$X'' = Y^{Z''} \bmod p \qquad 23$$

$$X_m = h(X'_m, X'', p, q, q^{-1} \bmod p) \qquad 24'$$

$$X = X_m - R*(1-(q^{-1} \bmod p)*q) \qquad 32$$

$$X = Y^Z \bmod n$$

Fig 4

## RÉFÉRENCES CITÉES DANS LA DESCRIPTION

**Documents brevets cités dans la description**

- US 20030044014 A

**Littérature non-brevet citée dans la description**

- **ALFRED J. MENEZES ; PAUL C. VAN OOR-SCHOT.** Handbook of Applied Cryptography. CRC Presse, 1997, 285-286

- **R.Novak.** *SPA-based Adaptive Chosen-Chiphertext Attack on RSA Implementation,* 2002, vol. 2274, 252-262